# EUROPEAN PATENT SPECIFICATION

(11) **EP 2 096 475 B1**
(45) Date of publication and mention of the grant of the patent: **25.01.2017**
(21) Application number: 09002643.6
(22) Date of filing: 25.02.2009
(51) Int. Cl.: G02B 7/08, G02B 13/00, G02B 7/02

(54) **Lens driving apparatus**
Linsensteuervorrichtung
Appareil de commande de lentille

(30) Priority: 28.02.2008 JP 2008047322
(43) Date of publication of application: 02.09.2009
(73) Proprietor: Mitsumi Electric Co., Ltd., Tama-shi, Tokyo 206-8567 (JP)
(72) Inventor: Yamaguchi, Kiyotaka, Tama-shi Tokyo (JP)
(74) Representative: Grünecker Patent- und Rechtsanwälte PartG mbB

(56) References cited:
- WO-A-2006/085714
- US-A1- 2006 028 320
- US-A1- 2007 116 445

## Description

### BACKGROUND

The present invention relates to a lens driving apparatus, and more particularly, to an auto-focus lens driving apparatus used for a small-sized portable camera.

A small-sized portable camera is mounted to a cellular phone equipped with a camera. In the small-sized portable camera, an auto-focus lens driving apparatus is used. In the past, various auto-focus lens driving apparatuses have been proposed.

For example, Patent Document 1 (Figs. 1 and 2) discloses a lens driving apparatus having an excellent impact resistance. The lens driving apparatus disclosed in Patent Document 1 includes a yoke which is formed in a substantially cylindrical shape, a base to which the yoke is mounted, a lens support body (lens holder) which is disposed on an inner peripheral side of the yoke, and a pair of plate springs which is attached to the lens support body. The pair of plate springs is called as front and rear springs. The front spring is disposed on a front side (one side) of the lens support body in an optical axis direction of the lens, and the rear spring is disposed on a rear side (the other side) in the optical axis direction of the lens. The yoke is formed in a substantially U-shape in a sectional view, where a magnet (permanent magnet) is disposed in the inside of the U-shape and a coil (driving coil) is disposed on an inner peripheral side of the magnet inside the U-shape. The magnet is fixed to the base via a rear spacer. The coil (driving coil) is fixed to an outer peripheral portion of the lens support body. The outer peripheral portion of the lens support body (lens holder) is inserted into the inside of the yoke. Accordingly, the outer peripheral portion of the lens support body (lens holder) is configured to be movable in a U-shape gap of the yoke. The yoke is fixed to an inner peripheral side of the base. An outer peripheral end of the rear spring is fixed to a base bottom portion of the base at a position between the rear spacer and the base bottom portion.

In the lens driving apparatus disclosed in Patent Document 1, the lens support body (lens holder) is formed in a substantially cylindrical shape, and accommodates the lens (a lens assembly and a barrel). The lens support body (lens holder) is attached so as to be movable in the inner peripheral side of the yoke in the optical axis. The front spring is configured as a substantially annular plate spring and includes an inner peripheral end and an outer peripheral end. The inner peripheral end of the front spring is sandwiched between the lens support body (lens holder) and a cap so as to be fixed to the lens support body (lens holder). A front spacer is interposed between the yoke and the outer peripheral end of the front spring. The rear spring is formed in the substantially same shape as that of the front spring, and is configured as a substantially annular plate spring. The inner peripheral end of the rear spring is fixed to a rear end of the lens support body (lens holder). The outer peripheral end of the rear spring is fixed to a position between the rear spacer and the base bottom portion of the base.

In the lens driving apparatus disclosed in Patent Document 1, an inner peripheral wall of the lens support body (lens holder) is provided with a female screw, and an outer peripheral wall of the lens assembly (barrel) is provided with a male screw. Accordingly, it is possible to mount the lens assembly (barrel) to the lens support body (lens holder) in such a manner that the lens assembly (barrel) is threaded into the lens support body (lens holder) in the optical axis direction while being rotated about the optical axis, the lens assembly (barrel) is accommodated in the lens support body (lens holder), and then the lens assembly (barrel) is fixed to the lens support body (lens holder) by means of an adhesive or the like.

Further, Patent Document 2 (Fig. 1) discloses a lens driving apparatus capable of smoothly driving a lens and of accurately aligning an optical axis direction of the lens with an imaging direction even when the imaging direction is inclined with respect to a perpendicular direction. The lens driving apparatus disclosed in Patent Document 2 includes a holder (lens holder) which holds a lens (lens assembly), an annular driving coil which is mounted to the holder (lens holder), magnetic field generating means which is provided on the side of a fixed member and applies a radial driving magnetic field to the driving coil, a first spring member (front spring) which connects an upper portion of the holder (lens assembly) to an upper portion of the fixed member, and a second spring member (rear spring) which connects a lower portion of the holder (lens holder) to a lower portion of the fixed member. Here, in the same manner as Patent Document 1, an inner peripheral end of the front spring is sandwiched between the front end of the lens holder and the cap so as to be fixed to the lens holder.

In the lens driving apparatus disclosed in Patent Document 2, the lens holder includes an outer casing portion and an inner casing portion, where an inner peripheral wall of the outer casing portion is provided with a female screw and an outer peripheral wall of the inner casing portion is provided with a male screw. Accordingly, it is possible to mount the inner casing portion to the outer casing portion in such a manner that the inner casing portion is threaded into the outer casing portion in the optical axis direction while being rotated about the optical axis, the inner casing portion is accommodated in the outer casing portion, and then the inner casing portion is fixed to the outer casing portion by means of an adhesive or the like.

Furthermore, Patent Document 3 (Figs. 2 and 3) discloses a cellular phone equipped with a camera capable of reducing a time required for an auto focus. The cellular phone (lens driving apparatus) equipped with the camera includes a holder (lens holder) which has a cylindrical portion of which one end is attached to a lens (a lens assembly and a barrel), a driving coil which is fixed to the holder (lens holder) so as to be positioned in a circumference of the cylindrical portion of the holder, a yoke which has a permanent magnet opposed to the driving coil, and a pair of plate springs which is provided on both sides of the cylindrical portion of the holder (lens holder) in the optical axis direction and supports the holder (lens holder) so as to be displaceable in the optical axis direction in the state where the holder (lens holder) is positioned in a radial direction. When a current is supplied to the driving coil so as to cause an interaction between a magnetic field of the permanent magnet and a magnetic field formed by the current flowing through the coil, it is possible to adjust a position of the lens (lens assembly) in the optical axis direction. Among the pair of plate springs, one of them is called as an upper plate spring (front spring), and the other of them is called as a lower plate spring (rear spring). An inner peripheral end of the upper plate spring (front spring) is sandwiched between an upper end (front end) of the holder and the stopper so as to be fitted to the holder (lens holder).

In Patent Document 3, the lens assembly (barrel) is just described to be attached to the cylindrical portion of the holder (lens holder), but any method of mounting the lens holder to the lens assembly (barrel) is not described. However, in Patent Document 3, it is supposed that the lens assembly (barrel) is mounted to the lens holder in terms of the screw-connection in the same manner as Patent Documents 1 and 2. Additionally, a cover is provided on the outside of the stopper in the optical axis direction, and a clearance is ensured between the stopper and the cover so that the stopper and the cover are disposed while not coming into contact with each other.
- Patent Document 1:: Japanese Patent Publication No. 2005-128392A
- Patent Document 2:: Japanese Patent Publication No. 2006-293243A
- Patent Document 3:: Japanese Patent Publication No. 2006-258969A

In the structures disclosed in Patent Documents 1 and 2 described above, the lens holder is rotated together with the lens assembly (barrel) upon mounting the lens assembly (barrel) to the lens holder or adjusting the focus. For this reason, a problem arises in that a deformation occurs in the upper plate spring (front spring) and the lower plate spring (rear spring) which support the lens holder in a vertical direction (longitudinal direction). In general, the plate spring is designed to have a thickness of several tens of micrometers. Therefore, the plate spring itself does not have a function to prevent the rotation of the lens holder.

Additionally, in Patent Document 3, it is necessary to ensure a clearance between the stopper and the cover so as not to come into contact with each other. For this reason, although the lens holder can be prevented from being largely rotated upon mounting the lens assembly (barrel) to the lens holder or adjusting the focus, the lens holder is rotated by the amount corresponding to the clearance. As a result, it is not possible to completely prevent the lens holder from being rotated.

Further prior art is known from documents US 2006/028320 A1 and WO 2006/085714 A.

### SUMMARY

It is therefore an object of the present invention to provide a lens driving apparatus capable of completely preventing the lens holder from being rotated upon mounting the barrel (lens assembly) to the lens holder or adjusting the focus.

The other objects of the invention will be apparent according to the following description.

The object is solved by claims 1 and 2.

According to this invention, it is possible to completely prevent the lens holder from being rotated together with the lens assembly upon mounting the lens assembly to the cylindrical portion of the lens holder or adjusting the focus.

### BRIEF DESCRIPTION OF THE DRAWINGS

The above and other aspects of the present invention will become more apparent by describing in detail exemplary embodiments thereof with reference to the accompanying drawings, wherein:
Fig. 1 is an external perspective view showing a lens driving apparatus according to an embodiment of the invention;
Fig. 2 is a cross-sectional view showing the lens driving apparatus shown in Fig. 1;
Fig. 3 is an exploded perspective view showing the lens driving apparatus shown in Fig. 1;
Fig. 4 is a perspective view showing a state where a jig is mounted to the lens driving apparatus shown in Fig. 1;
Fig. 5 is a perspective view showing the jig and the lens driving apparatus which are separated from each other when obliquely viewed from the upside; and
Fig. 6 is a perspective view showing the jig and the lens driving apparatus which are separated from each other when obliquely viewed from the downside.

### DETAILED DESCRIPTION OF EXEMPLARY EMBODIMENTS

Hereinafter, an exemplary embodiment of the invention will be described with reference to the accompanying drawings.

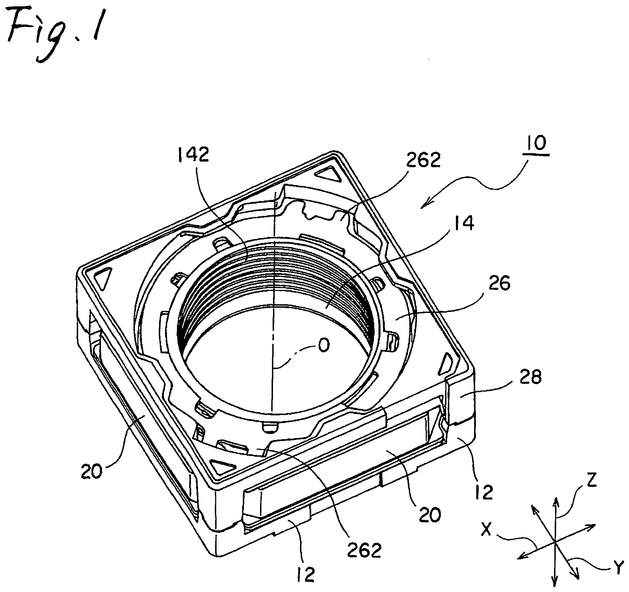

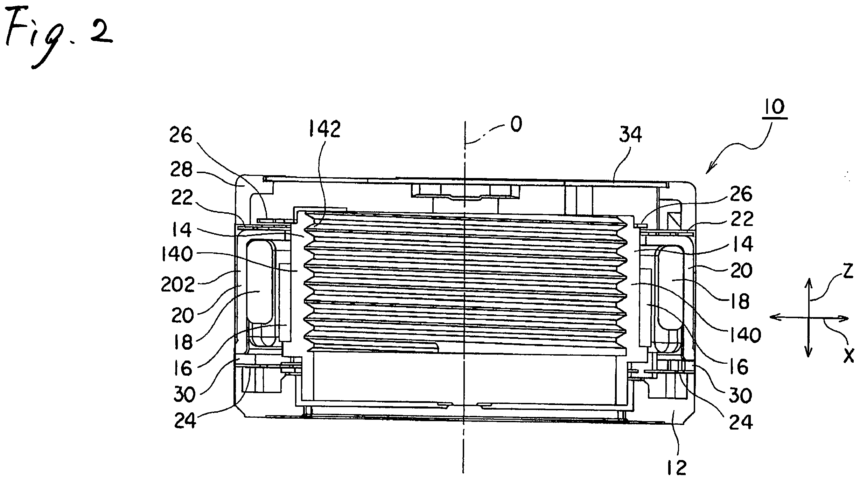

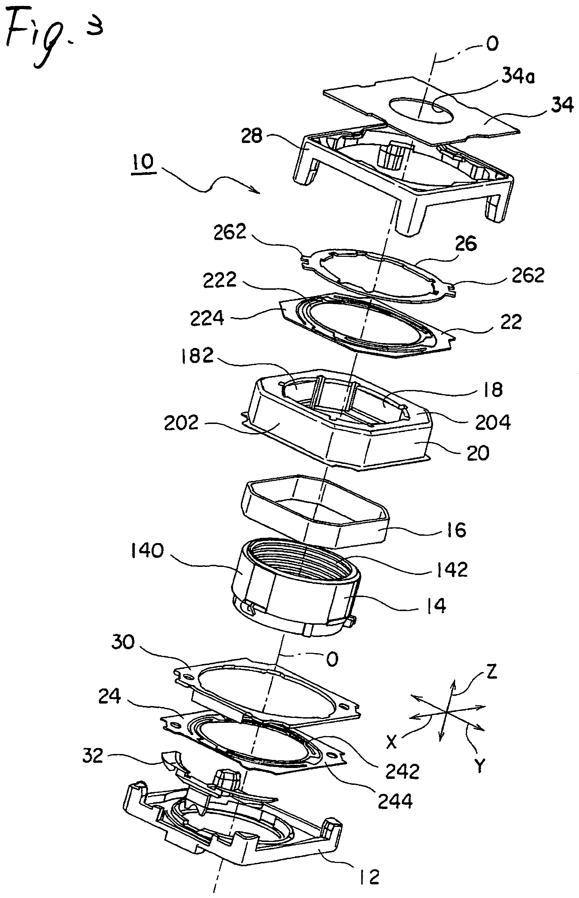

A lens driving apparatus 10 according to the embodiment of the invention will be described with reference to Figs. 1 to 3. Fig. 1 is an external perspective view showing the lens driving apparatus 10. Fig. 2 is a cross-sectional view showing the lens driving apparatus 10. Fig. 3 is an exploded perspective view showing the lens driving apparatus 10. Here, as shown in Figs. 1 to 3, an orthogonal coordinate system (X, Y, and Z) are used. In the orthogonal coordinate system (X, Y, and Z) shown in Figs. 1 to 3, the X axis indicates a longitudinal direction (depth direction), the Y axis indicates a traverse direction (width direction), and the Z axis indicates a vertical direction (height direction). Then, in the examples shown in Figs. 1 to 3, the vertical direction Z corresponds to a direction of an optical axis O of the lens.

However, at an actual use time, the longitudinal direction corresponds to the direction of the optical axis O, that is, the vertical direction Z. In other words, an upward direction of the Z axis corresponds to a forward direction, and a downward direction of the Z axis corresponds to a backward direction.

The lens driving apparatus 10 shown in the drawings is provided in a cellular phone equipped with an auto-focus camera. The lens driving apparatus 10 is used to move a lens assembly (barrel) (not shown) in the direction of the optical axis O. The lens driving apparatus 10 includes an actuator base 12 disposed in the lower side of (in rear of) the Z-axis direction (the direction of the optical axis O). A lower portion (rear portion) of the actuator base 12 is provided with an imaging element (not shown) disposed on a substrate. The imaging element picks up a subject image formed by the lens assembly and converts the pick-up image into an electrical signal. The imaging element is formed by, for example, a CCD (charge coupled device) type image sensor, a CMOS (complementary metal oxide semiconductor) type image sensor, or the like. Accordingly, a camera module is formed by the combination of the lens driving apparatus 10, the substrate, and the imaging element.

The lens driving apparatus 10 includes a lens holder 14 which includes a cylindrical portion 140 for holding the lens assembly (barrel), a driving coil 16 which is fixed to the lens holder 14 so as to be positioned in a circumference of the cylindrical portion 140, a yoke 20 which includes a permanent magnet 18 opposed to the driving coil 16, and a pair of plate springs 22 and 24 provided on both sides of the cylindrical portion 140 of the lens holder 14 in the direction of the optical axis O. The pair of plate springs 22 and 24 supports the lens holder 14 so as to be displaceable in the direction of the optical axis O in the state where the lens holder 14 is positioned in a radial direction. Among the pair of plate springs 22 and 24, one plate spring 22 is called as an upper plate spring, and the other plate spring 24 is called as a lower plate spring.

Additionally, as described above, at an actual use time, the upward direction of the Z axis (the direction of the optical axis O) corresponds to the forward direction and the downward direction of the Z axis (the direction of the optical axis O) corresponds to the backward direction. Accordingly, the upper plate spring 22 is called as a front spring, and the lower plate spring 24 is called as a rear spring. Each of the front spring 22 and the rear spring 24 has a thickness of 30-60 micrometers.

As shown in Fig. 3, the yoke 20 is formed in an octagonal cylindrical shape. The octagonal cylindrical shape of the yoke 20 is formed by four long side members opposed to each other and four short side members disposed between the four long side members. Accordingly, the driving coil 16 is formed in an octagonal cylindrical shape in accordance with the shape of the octagonal cylindrical yoke 20. The permanent magnet 18 is formed by eight rectangular permanent magnet pieces 182 disposed on each side member of the octagonal cylindrical yoke 20. The yoke 20 includes an octagonal cylindrical outer casing portion 202 and an octagonal ring end 204 provided on the upper end (front end) of the outer casing portion 202.

As shown in Fig. 2, the permanent magnet 18 is disposed on the inner peripheral surface of the outer casing portion 202 of the yoke 20 so as to have a gap with respect to the driving coil 16.

The front spring 22 is disposed on the front side of the lens holder 14 in the direction of the optical axis O, and the rear spring 24 is disposed on the rear side of the lens holder 14 in the direction of the optical axis O. The front spring 22 and the rear spring 24 have the substantially same configuration as each other. That is, the front spring 22 includes an inner peripheral end 222 attached to the lens holder 14 and an outer peripheral end 224 attached to the yoke 20. Three arm portions are provided between the inner peripheral end 222 and the outer peripheral end 224. Each of the arm portions is used to connect the inner peripheral end 222 to the outer peripheral end 224.

In the same manner, the rear spring 24 includes an inner peripheral end 242 attached to the lens holder 14 and an outer peripheral end 244 attached to the yoke 20. Three arm portions are provided between the inner peripheral end 242 and the outer peripheral end 244. Each of the arm portions is used to connect the inner peripheral end 242 to the outer peripheral end 244.

Additionally, the inner peripheral end is called as an inner ring, and the outer peripheral end is called as an outer ring.

The inner peripheral end 222 of the front spring 22 is sandwiched between the lens holder 14 and a stopper 26 so as to be fixed therebetween. In other words, the stopper 26 is fitted to the lens holder 14 so that the inner peripheral end 222 of the front spring 22 is sandwiched between the stopper 26 and the lens holder 14. On the other hand, the outer peripheral end 224 of the front spring 22 is sandwiched between the yoke 20 and a cover 28 so as to be fixed therebetween.

The stopper 26 has functions described below. That is, the stopper 26 has a function of allowing the inner peripheral end 222 of the front spring 22 to be high-precisely adhered to the lens holder 14 without a deviation. Accordingly, it is possible to improve a deviation of a VCM (voice coil motor) characteristic. Also, the stopper 26 has a function of improving an adhering strength of the front spring 22. Accordingly, it is possible to improve an impact resistance of the lens driving apparatus 10. Also, the stopper 26 has a function of preventing a deformation of the front spring 22 when a drop impact occurs in the lens driving apparatus 10. Accordingly, it is possible to also improve the impact resistance of the lens driving apparatus 10. Also, the stopper 26 has a function of determining a mechanical stroke of the lens driving apparatus 10.

Additionally, as described below, in this embodiment, the stopper 26 has a function of preventing a rotation of the lens holder 14.

On the other hand, the outer peripheral end 244 of the rear spring 24 is fixed to the yoke 20 via a spacer 30. In other words, the spacer 30 and the outer peripheral end 244 of the rear spring 24 are sandwiched between the yoke 20 and the actuator base 12 so as to be fixed therebetween. The inner peripheral end 242 of the rear spring 24 is fixed to a position on the rear end side of the lens holder 14.

An inner peripheral wall of the cylindrical portion 140 of the lens holder 14 is provided with a female screw 142. On the other hand, as it is not shown in the drawings, an outer peripheral wall of the lens assembly (barrel) is provided with a male screw threaded into the female screw 142. Accordingly, it is possible to mount the lens assembly (barrel) to the lens holder 14 in such a manner that the lens assembly (barrel) is screw connected to the cylindrical portion 140 of the lens holder 14 in the direction of the optical axis O while being rotated about the optical axis O, the lens assembly (barrel) is accommodated in the lens holder 14, and then the lens assembly and the lens holder 14 are adhered to each other by means of an adhesive or the like.

At this time, the lens holder 14 may be rotated together, but in this invention, as described below, the lens holder 14 is completely prevented from being rotated.

When a current is supplied to the driving coil 16 so as to cause an interaction between a magnetic field of the permanent magnet 18 and a magnetic field formed by the current flowing through the driving coil 16, and electromagnetic force is generated. Therefore, it is possible to adjust a position of the lens holder 14 (lens assembly) in the direction of the optical axis O.

A sheet-shaped electrode 32 is disposed between the rear spring 24 and the base 12. The sheet-shaped electrode 32 is used to supply a power to the driving coil 16. Additionally, an upper end (front end) of the cover 28 is provided with a plate 34 having an opening 34a.

As shown in the above-described embodiment, the stopper 26 has a ring shape and includes two U-shaped rotation preventing-restraining portions 262 which are protruded from the ring-shaped stopper outwardly in a radial direction of the ring-shaped stopper and are provided at positions having rotational symmetries through 180 degrees with respect to the optical axis O. The U-shaped rotation preventing-restraining portions 262 are used as rotation preventing members for completely preventing the lens holder 14 from being rotated upon mounting the lens assembly to the cylindrical portion 140 of the lens holder 14. That is, upon mounting the lens assembly to the cylindrical portion 140 of the lens holder 14, it is possible to completely prevent the lens holder 14 from being rotated in such a manner that a jig described below is inserted to the two U-shaped rotation preventing-restraining portions 262 to be held therein. At this time, a clearance between the stopper 16 and the cover 28 is ensured (maintained).

Accordingly, upon mounting the lens assembly (barrel) to the lens holder 14 or adjusting a focus, it is possible to prevent the deformation of the upper plate spring (front spring) 22 and the lower plate spring (rear spring) 24 which are used to support the lens holder 14 in the vertical direction (longitudinal direction). Further, since it is possible to regulate a movement of the lens holder 14 during the focus adjusting operation, it is possible to improve workability. Furthermore, since it is possible to regulate the movement of the lens holder 14 during the focus adjusting operation, it is possible to improve adjustment precision.

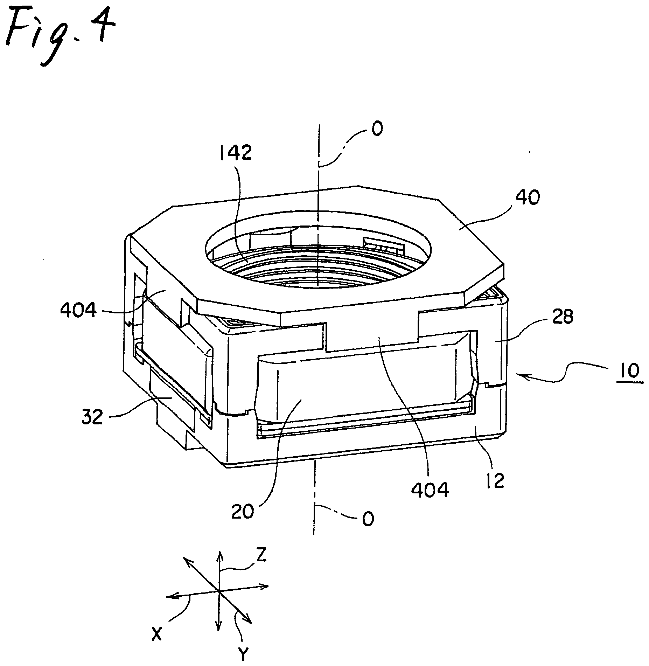

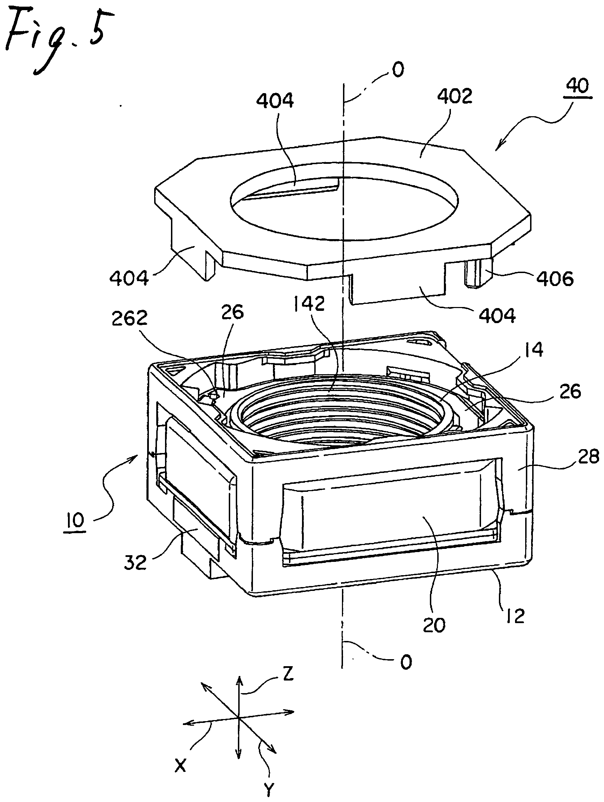

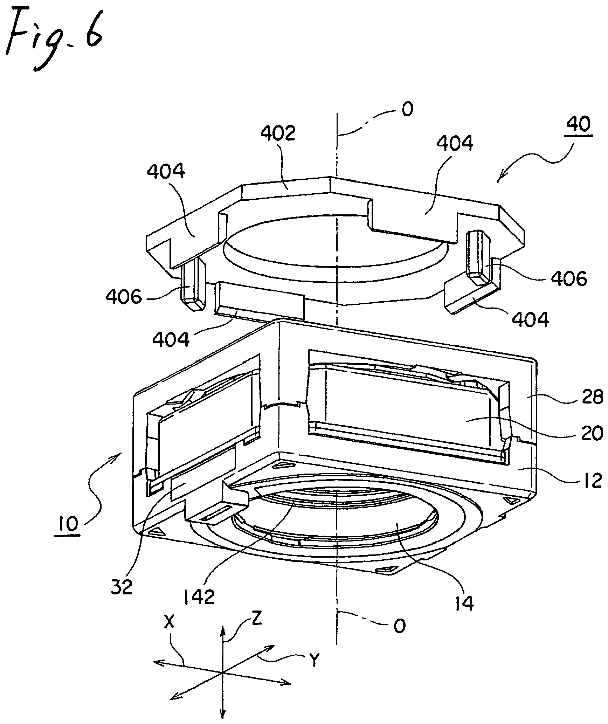

Next, a jig 40 used to be inserted to the two U-shaped rotation preventing-restraining portions 262 will be described with reference to Figs. 4 to 6. Fig. 4 is a perspective view showing a state where the jig 40 is mounted to the lens driving apparatus 10. Fig. 5 is a perspective view showing the jig 40 and the lens driving apparatus 10 which are separated from each other when obliquely viewed from the upside. Fig. 6 is a perspective view showing the jig 40 and the lens driving apparatus 10 which are separated from each other when obliquely viewed from the downside.

The jig 40 includes a ring-shaped portion 402 which is mounted to an upper surface (front surface) of the cover 28, four engagement pieces 404 which protrude downward (backward) from the ring-shaped portion 402 so as to come into contact with (contact with) four side surfaces of the cover 28, and two engagement protrusions 406 which protrude downward (backward) from the ring-shaped portion 402 at positions engaging with the two U-shaped rotation preventing-restraining portions 262.

Next, a procedure in which the lens assembly (barrel) is mounted to the cylindrical portion 140 of the lens holder 14 will be described with reference to Figs. 4 to 6.

In this case, first, as shown in Fig. 4, the jig 40 is mounted to the lens driving apparatus 10. At this time, the four engagement pieces 404 of the jig 40 come into contact with (contact with) the four side surfaces of the cover 28. At the same time, the two engagement protrusions 406 of the jig 40 engage with the two U-shaped rotation preventing-restraining portions 262 of the stopper 26. Accordingly, the lens holder 14 is held in the cover 28 while maintaining a clearance between the cover 28 and the stopper 26. That is, the lens holder 14 is completely prevented from being rotated with respect to the cover 28.

Next, the lens assembly (barrel) is mounted to the cylindrical portion 140 of the lens holder 14. Specifically, the lens assembly (barrel) is screw connected to the cylindrical portion 140 of the lens holder 14 in the direction of the optical axis O while being rotated in the circumferential direction of the optical axis O. Accordingly, the lens assembly (barrel) is accommodated in the lens holder 14. At this time, since the two engagement protrusions 406 of the jig 40 engage with the two U-shaped rotation preventing-restraining portions 262 of the stopper 26, it is possible to completely prevent the lens holder 14 from being rotated together with the lens assembly (barrel). After the lens assembly (barrel) arrives at a predetermined position of the cylindrical portion 140 of the lens holder 14 in terms of the screw-connection, the lens assembly (barrel) and the cylindrical portion 140 of the lens holder 14 are adhered to each other by means of an adhesive or the like.

As described above, the exemplary embodiment of the invention is described, but may be, of course, modified into various forms by the person skilled in the art without departing from the scope of the claims.

## Claims

1. A lens driving apparatus (10) comprising:
a lens holder (14) having a cylindrical portion (140) adapted to hold a lens assembly;
a driving coil (16) fixed to the lens holder (14) so as to be positioned in a circumference of the cylindrical portion (140);
a yoke (20) having a permanent magnet (18) opposed to the driving coil (16); and
a front spring (22) and a rear spring (24) provided on both sides of the cylindrical portion (140) of the lens holder (14) in an optical axis direction (O) of the cylindrical portion (140) and movably supporting the lens holder (14) in the optical axis direction (O) in a state where the lens holder (14) is positioned in a radial direction of the cylindrical portion (140),
wherein the lens driving apparatus (10) has a quadratic shape in a plane perpendicular to the optical axis direction (O),
wherein each of the front spring and the rear spring (22, 24) has an inner peripheral end (222, 242) attached to the lens holder (14) and an outer peripheral end (224, 244) attached to the yoke (20);
wherein an inner peripheral wall of the cylindrical portion (140) is provided with a female screw (142) so that an outer peripheral wall of the lens assembly, which is provided with a male screw can be threaded into the female screw (142);
wherein the lens driving apparatus (10) comprises a stopper (26) which sandwiches the inner peripheral end (222) of the front spring (22) between the cylindrical portion (140) of the lens holder (14) and the stopper (26),
wherein the stopper (26) has a function of improving an adhering strength of the front spring (22), a function of preventing a deformation of the front spring (22) when a drop impact occurs in the lens driving apparatus (10), and a function of determining a mechanical stroke of the lens driving apparatus (19);
wherein the stopper (26) comprises a rotation preventing member (262) which completely prevents the lens holder (14) from being rotated upon mounting the lens assembly to the cylindrical portion (140) of the lens holder (14), in a screwed manner,
wherein the rotation preventing member (262) is protruded from the ring-shaped stopper (26) outwardly in a radial direction of the ring-shaped stopper (26) toward corner portions of the quadratic shape of the lens driving apparatus (10),
wherein the rotation preventing member (262) has two restraining portions (262) provided at positions having rotational symmetries through 180 degrees with respect to an optical axis (O) of the cylindrical portion (140), and wherein each of the restraining portions (262) has a U-shape.

2. A method of mounting the lens assembly to the cylindrical portion (140) of the lens holder (14) of the lens driving apparatus (10) as set forth in claim 1, the method comprising:
engaging two engagement protrusions of a jig (40) with the two rotation preventing members (262) of the stopper (26);
threading the lens assembly into the cylindrical portion (140) of the lens holder (14) in the optical axis direction (O) while rotating the lens assembly about the optical axis (O) of the cylindrical portion (140); and
joining the lens assembly to the cylindrical portion (140).

## Patentansprüche

1. Eine Linsensteuervorrichtung (10), aufweisend:
einen Linsenhalter (14) mit einem zylindrischen Abschnitt (140), der adaptiert ist, um eine Linsenbaugruppe zu halten,
eine Antriebsspule (16), die an dem Linsenhalter (14) fixiert ist, um in einem Umfang des zylindrischen Abschnitts (140) positioniert zu sein;
ein Joch (20) mit einem Permanentmagneten (18), gegenüberliegend zu der Antriebsspule (16); und
eine vordere Feder (22) und eine hintere Feder (24), bereitgestellt an beiden Seiten des zylindrischen Abschnitts (140) des Linsenhalters (14) in einer optischen Achsenrichtung (O) des zylindrischen Abschnitts (140) und bewegbar den Linsenhalter (14) in der optischen Achsenrichtung (O) in einem Zustand unterstützen, bei dem der Linsenhalter (14) in einer Radialrichtung des zylindrischen Abschnitts (140) positioniert ist,
wobei die Linsensteuervorrichtung (10) eine quadratische Gestalt in einer Ebene rechtwinklig zu der optischen Achsenrichtung (O) hat,
wobei jede die vordere Feder und hintere Feder (22, 24) ein inneres peripheres Ende (222, 242) haben, das am Linsenhalter (14) angebracht ist, und ein äußeres peripheres Ende (224, 244) das an dem Joch (20) angebracht ist;
wobei eine innere periphere Wand des zylindrischen Abschnitts (140) mit einer weiblichen Schraube (142) bereitgestellt ist, sodass eine äußere periphere Wand der Linsenbaugruppe, die mit einer männlichen Schraube bereitgestellt ist, in die weibliche Schraube (142) eingeschraubt werden kann;
wobei die Linsensteuervorrichtung (10) einen Stopper (26) beinhaltet, der das innere periphere Ende (222) der vorderen Feder (22) zwischen dem zylindrischen Abschnitt (140) des Linsenhalters (14) und dem Stopper (26) sandwicht,
wobei der Stopper (26) eine Funktion des Verbesserns einer Haftstärke der vorderen Feder (22) hat und eine Funktion des Vermeidens einer Deformation der vorderen Feder (22), wenn ein Fallaufprall der Linsensteuervorrichtung (10) stattfindet, und eine Funktion des Bestimmens eines mechanischen Schlags auf die Linsensteuervorrichtung (19), wobei der Stopper (26) ein Drehverhinderungsglied (262) beinhaltet, das komplett verhindert, dass der Linsenhalter (14) sich während der Montage der Linsenbaugruppe an dem zylindrischen Abschnitt (140) des Linsenhalters (14) in einer schraubenden Art dreht,
wobei das Drehverhinderungsglied (262) von dem ringförmigen Stopper (26) in einer Radialrichtung des ringförmigen Stoppers (26) nach außen zu Eckabschnitten der quadratischen Gestalt der Linsensteuervorrichtung (10) hervorsteht,
wobei das Drehverhinderungsglied (262) zwei Beschränkungsabschnitte (262) aufweist, bereitgestellt an Positionen mit einer Rotationssymmetrie über 180 Grad in Bezug zu einer optischen Achse (O) des zylindrischen Abschnitts (140), und wobei jede der Beschränkungsabschnitte (262) eine U-Gestalt hat.

2. Eine Methode zum Montieren der Linsenbaugruppe an dem zylindrischen Abschnitt (140) des Linsenhalters (14) der Linsensteuervorrichtung (10) gemäß Anspruch 1, die Methode weist auf:
Eingreifen zweier Eingreifvorsprünge einer Schablone (40) mit den zwei Drehverhinderungsgliedern (262) des Stoppers (26),
Schrauben der Linsenbaugruppe in den zylindrischen Abschnitt (140) des Linsenhalters (14) in der optischen Achsenrichtung (O) während die Linsenbaugruppe um die optische Achse (O) des zylindrischen Abschnitts (140) herum gedreht wird, und
Verbinden der Linsenbaugruppe mit dem zylindrischen Abschnitt (140).

## Revendications

1. Appareil de commande de lentille (10) comprenant :
un support de lentille (14) comportant une portion cylindrique (140) adaptée pour supporter un assemblage de lentille ;
une bobine de commande (16) fixée au support de lentille (14) de manière à être positionnée dans une circonférence de la portion cylindrique (140) ;
une bobine de déviation (20) comportant un aimant permanent (18) opposé à la bobine de commande (16) ; et
un ressort avant (22) et un ressort arrière (24) pourvus des deux côtés de la portion cylindrique (140) du support de lentille (14) en direction de l'axe optique (O) de la portion cylindrique (140) et supportant le support de lentille (14) de manière mobile en direction de l'axe optique (O) dans un état où le support de lentille (14) est positionné en direction radiale de la portion cylindrique (140),
dans lequel l'appareil de commande de lentille (10) présente une forme quadratique dans un plan perpendiculaire à la direction de l'axe optique (O),
dans lequel chaque ressort parmi le ressort avant et le ressort arrière (22, 24) comporte une extrémité périphérique interne (222, 242) attachée au support de lentille (14) et une extrémité périphérique externe (224, 244) attachée à la bobine de déviation (20) ;
dans lequel une paroi périphérique interne de la portion cylindrique (140) est pourvue d'un filetage femelle (142) de telle sorte qu'une paroi périphérique externe de l'assemblage de lentille, qui est pourvue d'un filetage mâle, peut être vissée dans le filetage femelle (142) ;
dans lequel l'appareil de commande de lentille (10) comprend une butée (26), moyennant quoi l'extrémité périphérique interne (222) du ressort avant (22) est intercalée entre la portion cylindrique (140) du support de lentille (14) et la butée (26),
dans lequel la butée (26) comporte une fonction d'amélioration d'une force d'adhésion du ressort avant (22), une fonction de prévention d'une déformation du ressort avant (22) quand un impact de chute se produit dans l'appareil de commande de lentille (10), et une fonction de détermination d'une course mécanique de l'appareil de commande de lentille (19) ;
dans lequel la butée (26) comprend un élément de prévention de rotation (262) qui évite complètement que le support de lentille (14) soit pivoté lors du montage de l'assemblage de lentille sur la portion cylindrique (140) du support de lentille (14), de manière vissée, dans lequel l'élément de prévention de rotation (262) ressort de la butée annulaire (26) vers l'extérieur en direction radiale de la butée annulaire (26) vers des portions de coin de la forme quadratique de l'appareil de commande de lentille (10),
dans lequel l'élément de prévention de rotation (262) comporte deux portions de retenue (262) pourvues à des positions présentant des symétries de rotation sur 180 degrés par rapport à un axe optique (O) de la portion cylindrique (140), et dans lequel chacune des portions de retenue (262) présente une forme de U.

2. Procédé de montage de l'assemblage de lentille sur la portion cylindrique (140) du support de lentille (14) de l'appareil de commande de lentille (10) selon la revendication 1, le procédé comprenant :
l'engagement de deux protubérances d'engagement d'un gabarit (40) avec les deux éléments de prévention de rotation (262) de la butée (26) ;
le vissage de l'assemblage de lentille dans la portion cylindrique (140) du support de lentille (14) en direction de l'axe optique (O) lors de la rotation de l'assemblage de lentille autour de l'axe optique (O) de la portion cylindrique (140) ; et
la connexion de l'assemblage de lentille à la portion cylindrique (140).
